(19) Europäisches Patentamt
European Patent Office
Office européen des brevets

(11) **EP 4 250 230 A1**

(12) **EUROPEAN PATENT APPLICATION**

(43) Date of publication:
**27.09.2023 Bulletin 2023/39**

(21) Application number: **22175493.0**

(22) Date of filing: **25.05.2022**

(51) International Patent Classification (IPC):
**G06T 7/246** $^{(2017.01)}$ **G06T 11/00** $^{(2006.01)}$

(52) Cooperative Patent Classification (CPC):
**G06T 11/008; G06T 7/246;** G06T 2207/10076;
G06T 2211/408; G06T 2211/412

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2022 US 202263323283 P**

(71) Applicant: **Koninklijke Philips N.V.**
**5656 AG Eindhoven (NL)**

(72) Inventors:
• **GRASS, Michael**
**Eindhoven (NL)**
• **VEMBAR, Manindranath**
**Eindhoven (NL)**

(74) Representative: **Philips Intellectual Property &
Standards**
**High Tech Campus 52**
**5656 AG Eindhoven (NL)**

(54) **MOTION COMPENSATION IN SPECTRAL COMPUTED TOMOGRAPHIC IMAGING**

(57) A method for performing motion compensation in spectral CT imaging, to compensate for motion of at least one structural feature over a time period for which the scan is executed. The method comprises receiving or generating reconstructed image data for a plurality of spectral or material basis components the spectral CT imaging data and generating for each spectral or material component at least one motion vector field corresponding to detected motion of the feature of interest over at least a portion of the imaging time period. Motion compensation is applied using a final motion vector field either selected or constructed from the plurality of motion vector fields.

FIG. 1

EP 4 250 230 A1

FIG. 2

**Description**

FIELD OF THE INVENTION

The present invention relates to the field of tomographic imaging, in particular spectral x-ray computed tomographic imaging.

BACKGROUND OF THE INVENTION

When acquiring image data of a moving anatomical object, the motion can introduce artefacts. In particular, blurring or distortion of features of interest can occur if the imaged object to which the features belong were moving during the acquisition of the CT projection data.

It is known to apply motion compensation to acquired CT data in a procedure in which motion of structural features of interest is detected across frames of the image data set, and compensation then applied to the image data to compensate for the motion. The motion compensation procedure involves the determination of a motion vector field for the image data representative of the motion of the structural features of interest.

By way of example, motion compensated CT reconstruction is a known technique for helical and Step-and-Shoot scans. It is based on the reconstruction of multiple images at different time points, object detection and elastic registration to determine the motion vector field, and subsequent motion compensated reconstruction. By way of illustration, such a procedure has found advantageous application in the domain of cardiac CT imaging, where cyclical motion of the heart occurs. An image dataset can be acquired which spans at least a portion of a heart cycle, and the above procedure can be applied to compensate motion of at least one vessel of the heart. Although one may wish to capture images of multiple different points during the cardiac cycle, motion while acquiring the projection data leads to distortion which is undesirable, and provides no clinical value.

A sub-class of CT imaging is spectral CT imaging. This involves acquiring CT projection data at a number of different energy levels, and using this data to derive additional information about imaged structures, based for example on the known different spectral absorption characteristics of different materials. For example, this class of imaging can be used to obtain superior material differentiation in images, due to the differing energy dependence of x-ray attenuation on different tissues. In spectral CT imaging, there can be generated multiple different imaging datasets, each corresponding to a different component of the spectral imaging, e.g. Compton Scatter and Photoelectric images, or images corresponding to different energy levels or bands of the x-ray spectrum, or images corresponding to different materials. Multi-energy projection data can be decomposed with a decomposition algorithm into different possible basis component projection datasets (sometimes known as basis line integrals), where the different basis components correspond to different contributing factors to the x-ray attenuation by the body.

A known motion compensation procedure in the field of spectral CT imaging is described in US 2019/282184 A1.

SUMMARY OF THE INVENTION

This invention concerns a proposed approach to utilize the multiple imaging data subsets that are provided as an output of spectral CT image reconstruction to facilitate improved accuracy or fidelity of motion compensation.

Compared to conventional CT, motion compensation can be applied in spectral CT imaging in an improved manner. In particular, in spectral CT, multiple spectral images can be reconstructed from the spectral projection data. Different structural features with different material and structural characteristics will be visible with differing degrees of contrast in the various spectral images. Thus, it has been realized by the inventors that spectral CT allows for the possibility of selecting, for a given structural feature of interest, an optimal spectral or material image dataset, for motion tracking that feature, or of compositing data from multiple spectral or material image datasets so as to construct motion data with optimal reliability for the given feature of interest.

The invention is defined by the claims.

According to examples in accordance with an aspect of the invention, there is provided a computer-implemented method for motion compensation in computed tomography (CT) imaging.

The method comprises receiving spectral CT imaging data spanning an imaging time period, the spectral CT imaging data comprising a plurality of imaging data subsets, each corresponding to a different spectral or material component or channel of the spectral CT imaging, and each imaging data subset comprising a series of image frames spanning the imaging time period.

For each imaging data subset, the method comprises: processing the imaging data of the subset to identify at least one structural feature of interest, and determining at least one motion vector field for the at least one structural feature of interest, representative of motion of the at least one feature (relative to the image field of view) over the time period. Optionally, a respective motion vector field may be generated for each image frame (or at least a subset of them), representative of motion of the feature with respect to the temporally preceding image frame. The complete set of these frame-specific motion vector fields, may form an overall motion vector field having temporal as well as spatial dimension.

The method further comprises determining a single final motion vector field based on the motion vector fields for the plurality of imaging data subsets.

The method further comprises applying motion compensation to at least one of the spectral or material CT imaging data subsets based on the final motion vector field, to generate at least one motion-compensated imaging data subset. The motion-compensated imaging data subset may comprise all or only a subset of the image frames of the original imaging data subset, and wherein each frame is a motion-compensated frame.

The method further comprises generating a data output representative of the at least one motion-compensated imaging data subset.

The general approach of the proposed method is to generate one or more motion vector fields for each of the spectral imaging data subsets (corresponding to each spectral or material component of the CT imaging data), and then to use this multiplicity of motion information to arrive at one or more final motion vector fields which have improved reliability. For different types of tissue and different anatomical structures or features, the different spectral or material image sets will depict the relevant feature with differing contrast, and thus may show the feature more clearly or less clearly. The motion vector field for the relevant structural feature can be expected therefore to have a quality and reliability which depends upon the clarity with which the feature was represented in the underlying image data. Thus, the proposed method takes advantage of the multiple imaging data sets available from spectral CT imaging to select or configure a motion vector field with a view to arriving at a motion vector fields with improved reliability.

Each data subset corresponds to a particular spectral or material component or channel of the imaging data. To explain further, a spectral CT scan comprises acquiring projection data readings at multiple energy levels, and then processing this data with a decomposition and reconstruction algorithm to derive multiple reconstructed images which can correspond to different contributing components to the x-ray attenuation by the imaged body. For example, reconstructed images can correspond to different material components of the imaged body, different virtual monochromatic images, photoelectric and Compton scatter images and so on. For example, a dual-energy scanner measures a high and a low energy channel with a dual layer detector and, by means of material decomposition, the acquired projection data are recalculated into basis components (sometimes referred to as basis line integrals), for example photo and scatter projections, and after reconstruction these images can be translated into various images such as: monoE images, Zeff, Iodine, Ca suppression and many more.

Each imaging data subset may include at least reconstructed image data for each frame of each one of the spectral or material components or channels, e.g. a Photoelectric image and a Scatter image, or images for different x-ray energy levels. Optionally, each imaging data subset may additionally include projection data corresponding to each frame of each one of the spectral or material components.

Generating a respective final motion vector field from the plurality of initial motion vector fields can be done in different ways.

One way is to simply select a 'best one' of the plurality of initial motion vector fields, based on analysis applied to the plurality of motion vector fields which, for example, performs a quality or reliability assessment of each motion vector field. Another is to construct a composite motion vector field formed from a weighted combination of at least a selection of the plurality of motion vector fields. This option too could be based on a quality assessment performed on each motion vector field.

Thus, in at least a subset of embodiments, the step of determining the final motion vector field comprises applying a quality assessment to each of the motion vector fields derived from the imaging data subsets.

There are different options for the quality assessment. One general approach is to assess a consistency of each motion vector field, either with other of the motion vector fields, or with a pre-determined expected motion vector field for the given structural feature of interest. A second general approach is to compute one or more internal quality factors, e.g. pertaining to noise, temporal smoothness, outlier detection, detection of non-physiological motion vectors, and so on. A combination of both approaches could be used.

To expand on this further, in some embodiments, the performing the quality assessment for a given motion vector field may comprise comparing the motion vector field with a reference motion vector field, where the reference motion vector field may be another one of the motion vector fields derived from a different imaging data subset, or may be an average motion vector field computed from the plurality of motion vector fields derived from the imaging data subsets, or may be a further pre-determined reference motion vector field. The output of the quality assessment for a given motion vector field may be dependent upon a degree of consistency with the reference motion vector field.

In the case where the reference motion vector field is a further pre-determined motion vector field, this reference motion vector field may be a pre-determined expected or typical motion vector field for the structural feature of interest. The quality of a given motion vector field as determined by the quality assessment may be dependent upon a degree of consistency with the reference motion vector field.

As noted above, an alternative to comparing a motion vector field with an external reference is to compare the motion vector fields with one another. For this, an average or baseline field can be computed, and the quality assessment may determine consistency with this average field. In other words, an indicator of a deviation or variance from the mean for a given motion vector field is computed. Higher quality might be dependent upon smaller deviation from the average.

As noted above, the quality assessment applied to the motion vector fields may additionally or alternatively comprise computing one or more (internal) quality factors using one or more pre-determined quality analysis algorithms, for example local noise, spatial or temporal smoothness, or outlier detection.

In some examples, the quality assessment for a given motion vector field is performed by applying to the motion vector field a pre-trained artificial neural network, the artificial neural network trained to receive as input a motion vector field, and to generate as output one or more quality factors.

As noted above, deriving the final motion vector field can be done in at least two main ways: selecting one of the motion vector fields, or constructing a composite motion vector field based on a combination of the plurality of motion vector fields.

Thus, in some embodiments, determining the final motion vector field comprises selecting one of the plurality of motion vector fields determined from the imaging data subsets based on the quality assessment applied to the plurality of motion vector fields.

Optionally, the selecting comprises selecting one of the imaging data subsets based on a comparison with a reference motion vector field. Optionally, the selecting comprises selecting the imaging data subset for which the corresponding motion vector field is most consistent with a reference motion vector field. Optionally, the selecting may be based on the quality factors for each motion vector field.

In some embodiments, the final motion vector field is a constructed motion vector field, which is generated based on a combination of the plurality of motion vector fields derived from the plurality of imaging data subsets.

The final motion vector field may be for example be generated as a weighted sum of the motion vector fields derived from the plurality of CT imaging data subsets.

Consistent with at least any of the above embodiments, the received CT imaging data may be image data of at least a portion of a heart of a subject, and wherein the structural feature of interest is a blood vessel comprised by the heart.

In some embodiments, the received spectral CT imaging data includes, for each of the image frames of each of the imaging data subsets, CT projection data associated with the image frame, and a reconstructed image associated with the image frame, and wherein the steps of identifying the at least one structural feature of interest and determining the at least one motion vector field are applied to the reconstructed image data for at least one image frame, and the step of performing the motion compensation comprises applying a reconstruction algorithm to the projection data of the at least one image frame, wherein one or more parameters of the reconstruction algorithm are configured in dependence upon the derived motion vector field.

A further aspect of the invention is a computer program product comprising computer program code which is configured, when executed by a processor, to cause the processor to perform a method in accordance with any embodiment described in this disclosure, or in accordance with any claim of this application.

A further aspect of the invention is a processing arrangement, comprising an input/output and one or more processors. The one or more processors are adapted to execute the following steps:

receive, at the input/output, spectral CT imaging data spanning an imaging time period, the spectral CT imaging data comprising a plurality of imaging data subsets, each corresponding to a different spectral or material component of the spectral CT imaging, and each imaging data subset comprising a series of image frames spanning the imaging time period;
for each imaging data subset:

process the imaging data to identify at least one structural feature of interest, and
determine at least one motion vector field for the at least one structural feature of interest, representative of motion of the at least one feature over at least a portion of the imaging time period;
determine at least one final motion vector field based on the motion vector fields for the plurality of imaging data subsets;
apply motion compensation to at least one of the spectral CT imaging data subsets based on the at least one final motion vector field, to generate at least one motion-compensated imaging data subset; and
generate, at the input/output, a data output representative of the at least one motion-compensated imaging data subset.

Another aspect of the invention is a system comprising: a CT imaging apparatus for acquiring spectral CT imaging data; and a processing arrangement as outlined above, or in accordance with any embodiment described in this disclosure, or in accordance with any claim of this application, and wherein the input/output of the processing arrangement is communicatively coupled with the CT imaging apparatus and arranged to receive the spectral CT imaging data acquired thereby.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 shows a block diagram of an example method in accordance with one or more embodiments of the invention;
Fig. 2 shows an example CT imaging apparatus;
Fig. 3 shows example results of motion compensation applied to CT images obtained from conventional and spectral CT imaging;
Fig. 4 shows example images of an anatomical region corresponding to different spectral or material components, to demonstrate the varying contrast of a feature of interest depicted in each of them; and
Fig. 5 shows an example processing arrangement and system in accordance with one or more embodiments of the invention.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for performing motion compensation in spectral CT imaging, to compensate for motion of at least one structural feature. The method comprises receiving or generating reconstructed imaging data for a plurality of spectral or material components of a spectral CT imaging dataset and generating for each spectral or material component data subset at least one motion vector field corresponding to detected motion of the feature of interest over at least a portion of the imaging time period. A quality assessment may be performed on each of the plurality of motion vector fields, and motion compensation applied using a final motion vector field either selected or constructed from the plurality of motion vector fields, and this selection or construction optionally being based on the quality assessment. The quality assessment could be in part based on a consistency assessment of each motion vector field with other of the motion vector fields or with a pre-defined reference motion vector field, and/or it could be based on internal quality characteristics such as noise level or temporal smoothness.

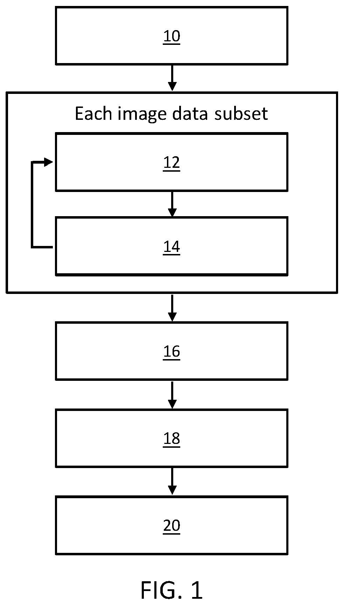

Fig. 1 shows a block diagram of the steps of the method in accordance with one or more embodiments of the invention. These will be explained in more detail subsequently.

The method is computer-implemented. The method comprises receiving 10 spectral CT imaging data spanning an imaging time period, the spectral CT imaging data comprising a plurality of imaging data subsets. Each imaging data subset corresponds to a different spectral or material component of the spectral CT imaging (e.g. corresponding to a different decomposed basis component of the acquired projection data, and/or a different component of the source x-ray energy spectrum) and each imaging data subset comprises a series of image frames spanning the imaging time period. Another way of saying this is that each image frame corresponds to a different time point.

Each image frame may be a volumetric image frame comprising reconstructed image data for a volumetric region.

As will be known to the skilled person, in spectral CT, for a given set of obtained spectral projection data, this data can be reconstructed to form a plurality of different images corresponding to different spectral or material aspects or components of the image data, and these are typically referred to as 'spectral images'. For example, different reconstructed spectral images may correspond to different contributing components to x-ray attenuation by the imaged body. For example, one common implementation comprises reconstructing dual-energy CT projection data into a pair of spectral images corresponding to Photoelectric effect and Compton Scatter effect contributions to the x-ray attenuation, and these might be referred to as Photoelectric and Scatter images respectively. Following this example for instance, the spectral components or channels of the two imaging data subsets would be the Photoelectric and Scatter components, and one of the imaging data subsets would comprise a time-series of Photoelectric images, and another would comprise a time-series of Scatter images. This represents just one example to illustrate what is meant by the reference to spectral or material components or channels, and the skilled person will be aware that a multiplicity of options exist for spectral CT reconstruction.

Typically more than two spectral images can be reconstructed from source spectral CT projection data, through application of different decomposition and reconstruction algorithms. In some cases, the different spectral components or channels correspond to different mono energy levels (mono keV reconstructions). In some cases, different spectral images can correspond to different particular materials, e.g. Iodine or Calcium or Water, and so the different imaging data subsets might correspond to different materials.

The imaging data which is received may be already reconstructed image data, or projection data may be received and the method may further include the steps of reconstructing the plurality of imaging data subsets for the different spectral or material components. In some cases, the received data may include both projection data and reconstructed image data for each frame of each spectral or material component. In some cases, the received data may be multi-energy projection data, and the method may comprise decomposing the projection data into a set of two or more basis component projection datasets (sometimes referred to as basis line integrals), where these form the two or more CT imaging data subsets. The method may further comprise reconstructing the decomposed projection data to form reconstructed data subsets, each corresponding to a different basis component of the spectral imaging.

For each imaging data subset, the method comprises processing 12 the imaging data to identify at least one structural feature of interest. This may be done using segmentation, or another object detection method. By way of example, for detecting a blood vessel, the well-known Frangi vesselness filter could be applied.

The method further comprises, for each imaging data subset, determining 14 at least one motion vector field for the at least one structural feature of interest, representative of motion of the at least one feature (relative to the image field of view) over at least a portion of the time period, i.e. between the succession of image frames in each imaging data subset. This can be done for example by performing registration between temporally consecutive frames in each imaging data subset and wherein the motion between the frames of the object can be derived from the net displacement detected by the registration algorithm. Multiple methods are possible for detecting displacement between consecutive frames of the feature of interest and, if done for every pair of consecutive frames, a motion vector field or set of motion vector fields for the whole of the imaging period can be built up. For example, a (spatial) motion vector field may be generated for each image frame of each imaging data subset, representative of the motion of the feature of interest relative to the immediately previous image frame. The motion vector field for each time point (i.e. each frame) may span a plurality of points belonging to the feature of interest, e.g. around an outline of the feature, or a volume, area or line occupied by the feature. The set of motion vector fields for each frame may form a complete 4D motion vector field, spanning 3D space and the spanning time period covered by the set of frames. Alternatively a set of one or more motion vector fields may be generated for just a subset of the image frames, covering only a portion of the imaging time period. At minimum the claimed method could correspond to motion compensation applied between just two temporally consecutive image frames, and where the motion vector field is computed based on motion of the feature of interest between this pair of frames, and the motion compensation applied, at minimum, to just one of the frames. However, more generally the motion compensation would be applied across more than just two frames, and this point is noted merely to make clear the scope of the claimed invention.

The method further comprises determining 16 a single final motion vector field based on the motion vector fields for the plurality of imaging data subsets.

The method further comprises applying 18 motion compensation to at least one of the spectral CT imaging data subsets based on the final motion vector field, to generate at least one motion-compensated imaging data subset. The motion compensation may be a procedure which is applied to one individual image frame at a time, where the image frame may be a 3D (volumetric) image frame. The procedure may be applied to one or multiple image frames of at least one of the imaging data subsets. The output of each execution of the motion compensation procedure may in this case be a reconstructed image frame in which the motion represented in the motion vector field is compensated, so that the image artefacts associated with the feature of interest are reduced or eliminated.

The method further comprises generating 20 a data output representative of the at least one motion-compensated imaging data subset. This simply means generating a data signal which carries the motion compensated data, to permit output of the data to another processing unit, or to a data store, to another computer for example. The method may comprise communicating or transmitting this data output to a defined target address in some examples, where this target address could be user-configurable.

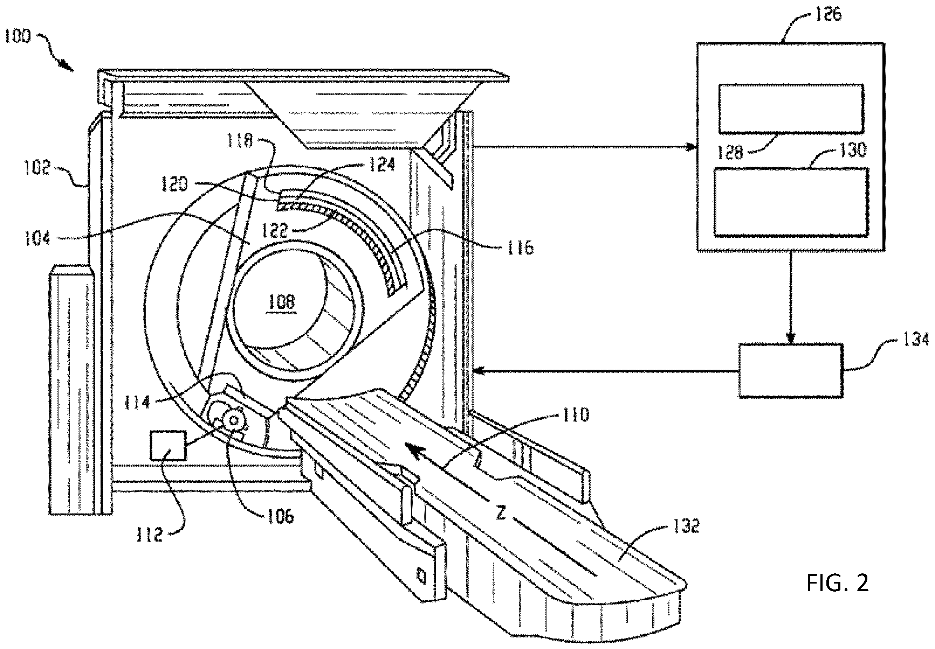

By way of further clarifying features of the invention, Fig. 2 shows an example CT imaging apparatus for acquiring spectral CT imaging data. It is to be noted that the invention does not require the steps of actually acquiring the CT projection data, or of reconstructing the projection data to form the image data, although these steps can optionally be included as a further part of the method. The method at minimum requires receipt of reconstructed spectral CT image data, which may be from a CT scanner or may be from a data-store. The following description of Fig. 2 is provided by way of useful background to assist in understanding features comprised by embodiments of the invention.

With reference to Fig. 2, a computed tomography (CT) scanner 100 includes a generally stationary gantry portion 102 and a rotating gantry portion 104. The rotating gantry portion 104 is rotatably supported by the generally stationary gantry portion 102 via a bearing or the like.

A radiation source 106, such as an x-ray tube, is supported by the rotating gantry portion 104 and rotates therewith around an examination region 108 about a longitudinal or z-axis 110. A source collimator 114 or the like collimates radiation emitted by the radiation source 106, producing a generally cone, fan, wedge or otherwise-shaped radiation beam that traverse the examination region 108.

A radiation source voltage determiner 112 selectively determines the (mean) emission voltage. In one instance, the radiation source voltage determiner 112 switches or changes the emission voltage between successive scans of the same subject/object (this is known as kVp-switching). Alternatively, the radiation source voltage determiner 112 switches the emission voltage during the same scan, for example, from view-to-view, within a view, and/or otherwise. As a result, radiation beams with different energy spectra may be used to scan the subject/object. Since the absorption of photons by a material is dependent on photon energy, the data from the two scans can be used to determine information indicative of the elemental composition, such as an atomic number, of the tissue/material in the scanned subject/object. In this way, data pertaining to two different spectral channels is obtainable.

By way of non-limiting illustration, the radiation source voltage determiner 112 may switch the emission voltage between about 80 kV and about 140 kV between scans, between views, within a view, and/or otherwise. A filter may be used to filter low energy photons at the higher emission voltage, which may improve the spectral sensitivity of the system. As a consequence of switching emission voltages, the radiation source 106 produces a first radiation beam with a first energy spectrum and a second radiation beam with a second different energy spectrum. Of course, other emission voltages are contemplated, and the radiation source voltage determiner 112 may switch between more than two different emission voltages.

A detector array 116 subtends an angular arc opposite the examination region 108 relative to the radiation source 106 and detects radiation that traverses the examination region 108. The illustrated detector array 116 may include a photosensor array 118, with photosensors such as photodiodes or the like, and a scintillator array 120, which is optically coupled to the photosensor array 118 on the light sensitive side of the photosensor array 118. The detector array 116 is arranged in the scanner 100 so that the scintillator 120 receives the incident radiation. Although only a single row energy-resolving detector array 116 is shown, a two dimensional energy-resolving detector array, with rows extending in the z-axis direction and columns extending in a transverse direction, is also contemplated herein.

Instead or in addition to the use of multiple emission voltages, an energy-resolving detector or a photon counting detector may be used. An energy-resolving detector may comprise a scintillator array 120 which includes two or more regions 122, 124 having different spectral sensitivities. The spectral sensitivities of the photosensors in the photosensor array 118 are matched to the emission spectrums of the scintillation regions 122, 124. By way of example, some of the photosensors in the photosensor array 118 detect light emitted by the scintillation region 122 and other photosensors in the photosensor array 118 detect light emitted by the scintillation region 124. Generally, lower energy photons are absorbed in the scintillation region 122 whereas photons that traverse the scintillation region 122 are absorbed in the scintillation region 124. Alternatively, the energy-resolving detector array may be of the direct conversion type.

The energy-resolving detector array 116 outputs a signal or projection data indicative of the detected radiation. The array 116 can be a dual-layer detector array, an energy-sensitive photon counting detector array or another energy-resolving detector array. As the emission voltage may change during a scan and the energy-resolving detector array 116 is sensitive to photon energy, the energy-resolving detector array 116 generates energy-resolved projection data $d_n$, wherein n represents energy-resolved data for the nth energy range. By way of example, in the case where the emission voltage switches between two different emission voltages during a scan and the detector array 116 includes two sets of photosensors with two different spectral sensitivities, the resulting projection data includes four (4) independent energy-resolved measurements, representing the different combinations of two emission voltages and two photosensor spectral sensitivities.

A reconstructor 126 reconstructs the projection data from the detector array and generates volumetric image data indicative of the examination region 108. As noted above, the reconstructor 126 receives the energy resolved detector signals $d_n$ indicative of the energy detected in n energy ranges. The reconstructor 126 employs one or more spectral decomposition algorithms 128 and/or one or more spectral reconstruction algorithms 130, such as a Maximum Likelihood (ML) reconstruction algorithm that reconstructs spectral data, which take into account the detected spectral information. The resulting reconstructed image data includes a plurality of subsets of image data, each corresponding to a different spectral or material component.

For example, in one implementation, the decomposition algorithm 128 might include an algorithm that models the data as a combination of the photo-electric effect with attenuation spectrum P(E) and the Compton effect with attenuation spectrum C(E). The density length product for these components, namely, that of the photo-electric effect component p and the Compton effect component c, in each detection signal $d_n$ can be modeled as a non-linear system according to the relationship:

$$\text{Equation 1: } d_n = \int dE\, T(E)\, D_n(E) \exp\left(-\left(pP(E) + cC(E)\right)\right)$$

where T(E) is the emission spectrum of the radiation source 106 and $D_n(E)$ is the spectral sensitivity of the nth measurement.

Where at least two detection signals $d_1$, $d_2$ are available for at least two energy ranges, a system of at least two equations is formed having two unknowns, which can be solved with known numerical methods. The results, p and c, are known as spectral line integrals. These can be used alone or in combination to reconstruct images of the desired component using conventional reconstruction methods. These images are known as reconstructed spectral images. For example, in the above example, a Compton scatter image and photo-electric image can be generated for the imaged volume.

The reconstruction can be performed for a series of image frames which might be captured in for example a helical scan or a step-and-shoot scan. Another term for a step-and-shoot scan is a sequential scan; it is an imaging protocol in which projection data is acquired for one axial location at a time. For each axial location, the rotating gantry of the scanner rotates once about the patient to acquire projection data, before the patient is then moved axially to position the gantry at a new axial location relative to the patient, and so on. This is different to a helical scan protocol in which the patient is moved continuously along the axial direction, while the scanner rotates continuously.

As discussed above, the method typically comprises receiving a plurality of subsets of reconstructed spectral image data, each corresponding to a separate spectral or material component. Each includes image frames for a series of time points.

The method further comprises, for each imaging data subset, detecting an structural feature of interest. By way of example, one advantageous application for this method is for cardiac imaging. The structural feature of interest may be at least one blood vessel or valve of the heart. By way of another example, the structural feature of interest may be a pacemaker wire or another implanted structure. The detection of the feature of interest may be achieved using segmentation in some examples. Various other object-detection methods will be known to the skilled person. For example, for detecting blood vessels, the well-known Frangi vesselness filter could be applied.

The at least one detected feature of interest can be tracked in each imaging data subset across at least a subset of the plurality of frames, so that its position in each image frame is identified. At minimum, its position should be detected in at least two consecutive frames in each imaging data subset.

At least one motion vector field can be constructed for each imaging data subset. Typically, a respective motion vector field may be generated for each respective image frame of each imaging data subset, or at least a subset of the image frames. The motion vector field for a given frame may represent motion of the feature of interest between a previous frame and the given frame.

There are multiple specific means of generating the motion vector field. One approach is image-based elastic registration. Another approach is using model-based segmentation, applied to both image frames of a given pair of consecutive image frames, and wherein the feature of interest position is then detected in each frame based on the segmentation, from which a motion vector field from one frame to the next can be derived. Another approach is to use landmark tracking. Another method is to train an AI algorithm, such as an artificial neural network, to generate a motion vector field for a pair of input image frames, representative of a motion of the feature of interest between the two image frames.

Method for generating the motion vector field are, by way of example, described in detail in the following paper: van Stevendaal, U., von Berg, J., Lorenz, C. and Grass, M. (2008), A motion-compensated scheme for helical cone-beam reconstruction in cardiac CT angiography. Med. Phys., 35: 3239-3251. Section II.B of this paper is particularly relevant.

The motion vector fields for the plurality of imaging data subsets may be referred to as initial motion vector fields or candidate motion vector fields. From these, one motion vector field will be arrived at, which will be used to perform motion compensation for the feature of interest in at least one of the received imaging data subsets.

Once the final motion vector field has been determined, the motion compensation can be performed as follows.

The motion compensation may be applied to one of the imaging data subsets or only one of them. The motion compensation may be a process which is applied to image frames individually, one by one. It may be applied to only one frame or to multiple frames.

By way of one example implementation, the motion compensation can be done by reprocessing the underlying projection data associated with a given image frame, but wherein one or more parameters of the reconstruction algorithm have been adapted based on the detected motion represented by the motion vector field computed between that frame and a neighboring frame, so that the reconstruction takes account of the motion. In other words, the reconstruction algorithm is configured to assume motion of the feature of interest being imaged, rather than (as is standard) to assume that the feature of interest is static (or, in the case of helical imaging, that the feature of interest is moving at some fixed motion, determined by the fixed axial speed of the patient support through the gantry). This method assumes that the motion of the feature detected between a first frame and a second frame is representative of the motion of the feature during acquisition of the projection data of the second frame, and then compensated for this motion by repeating the reconstruction of the second frame, with this motion vector field assumed. This can be done for any number of frames for which motion compensation is desired. Other methods are also possible. For example, the projection data itself could be processed to compensate for the motion. Alternatively, the motion compensation procedure could be applied entirely on the reconstructed image data using a suitable algorithm. A trained AI algorithm could be a suitable approach for implementing this for example.

A method for performing the motion compensation based on the motion vector field is, by way of example, described in detail in the following paper: van Stevendaal, U., von Berg, J., Lorenz, C. and Grass, M. (2008), A motion-compensated scheme for helical cone-beam reconstruction in cardiac CT angiography. Med. Phys., 35: 3239-3251. Section II.C of this paper is particularly relevant.

With regards to the step of determining the final motion vector field from the plurality of initial motion vector fields (determined from the received imaging data subsets), there are different options, which will now be outlined in detail. It is noted that this step may be applied to each motion vector field that is computed. In the case that one field is computed for each frame, then the determining of a final motion vector field may a step that is done for each motion vector field, i.e. for each frame.

In general, the step of determining the final motion vector field may be based on application of a pre-determined quality assessment to each of the initial motion vector fields. This could comprise one or more procedures, encoded in algorithms, which may be stored on a memory of a processing arrangement which executes the method.

There are different options for the quality assessment. One general approach is to assess a consistency of each motion vector field, either with other of the motion vector fields, or with a pre-determined expected motion vector field for the given structural feature of interest. A second general approach is to compute one or more internal quality factors, e.g. pertaining to noise, temporal smoothness and so on. A combination of both approaches could be used.

Turning to the first approach to assessing consistency, the quality assessment for a given motion vector field may comprise comparing the motion vector field with a reference motion vector field. The output of this may be a numerical score indicative of degree of consistency with the reference motion vector field.

In a first possible implementation of this, the reference motion vector field may be a pre-stored reference motion vector field, which may for example represent an expected or typical motion vector field for the given feature. Comparison with this reference may identify motion vector fields which are not consistent with the feature being tracked, which may indicate lack of reliability. This pre-determined motion vector field may for example be stored in a local memory in advance and retrieved as part of the method for the purpose of the comparison. It may for example have been determined in advance based on averaging or otherwise compositing motion vector fields for the feature obtained over a plurality of previous, real-world scans.

In a second possible implementation, the reference motion vector field may be an average motion vector field derived from the plurality of initial motion vector fields. By comparing each motion vector field with this average field, a deviation or variance from the average can be derived, which gives an indication of whether and to what extend a given motion vector field is an outlier result. Greater consistency with the average field might be taken to be indicative of greater quality/reliability in some examples. The average field could be a mean or median field, or any other kind of average field. It could be a weighted average field in some examples.

In a further possible implementation, the reference motion vector field may simply be a selected one of the other motion vector fields. This may be selected based on proximity with an expected motion field, or based on meeting some other pre-defined threshold or criterion.

In any of these cases, the output of the quality assessment for a given motion vector field may be dependent upon a degree of consistency with the reference motion vector field.

As noted above, the quality assessment applied to the motion vector fields may additionally or alternatively comprise computing one or more (internal) quality factors using one or more pre-determined quality analysis algorithms, for example local noise, spatial or temporal smoothness, or outlier detection.

With regards to local noise, this can be understood as follows. For a given motion vector field, the pattern of motion vectors as a function of position across the image frame can be analyzed to detect outlier vectors or motion spikes. Assumptions may be made about the degree of variation in motion vector between two spatially adjacent points for example, or two points within a certain proximity of one another, and changes in the motion between such two points outside of such boundaries can be assumed to be noise. A noise metric for a given motion vector field could be derived for example based on the number and degree of such outlier motion vectors.

With regards to temporal smoothness, a similar analysis could be performed as for the noise detection between spatially corresponding motion vectors of a series of temporally consecutive motion vector fields (for temporally consecutive frames). Here, a certain degree of temporal smoothness of motion vectors for a given spatial point or area may be assumed, and changes in the motion vector between two frames outside of certain pre-defined boundaries or parameters may be assumed to be unphysiological and representative of error. The number and degree of such temporal outlier vectors could be analyzed for a given motion vector field and used to determine a metric of temporal smoothness for the motion vector field.

With regards to outlier detection, this may simply comprise defining upper and lower thresholds for what is considered physiological motion, and motion vectors outside of the range defined by these thresholds are classified as unphysiological.

Another type of internal quality assessment may be to assess the degree of spatial correspondence between motion vectors and the underlying physiology or anatomy. In other words, an assumption may be made that the pattern of motion vectors should map spatially onto the underlying anatomy, so that detected motion vectors outside the boundary of the anatomical object or feature may be classified as anomalous.

In some examples, the quality assessment for a given motion vector field is performed by applying to the motion vector field a pre-trained artificial neural network, the artificial neural network trained to receive as input a motion vector field, and to generate as output one or more quality factors. The neural network may be trained in advance in a supervised training procedure, using training data which comprises sample images, annotated with one or more quality indicator scores, and wherein the neural network is trained to output the quality indicator scores.

In some examples, the quality assessment might comprise a combination of the above approaches.

Once the plurality of initial motion vector fields have been derived, a final motion vector field can be determined based thereon. Optionally, this could be based on a quality assessment applied to the initial motion vector fields (as discussed above), but this is not essential. As noted above, deriving the final motion vector field can be done in at least two main ways: selecting one of the motion vector fields, or constructing a composite motion vector field based on a combination of the plurality of motion vector fields.

In accordance with a first approach, the final motion vector field is obtained simply by selecting one of the plurality of initial motion vector fields. This could be based on their respective quality scores derived from the quality assessment. For example, the motion vector field with the highest quality score is selected.

In accordance with a second approach, the final motion vector field is constructed from a composite of at least a selection of the initial motion vector fields. It could be formed as a weighted sum of the initial motion vector fields. The weightings could be determined in different ways. In a simplest case, the weightings are all identical, so that the composite field is just a mean motion vector field. In other cases, the weights could differ. By way of one example, the weighting for each motion vector field could be set based on the quality score output from the optional quality assessment applied to the respective motion vector fields. Instead of a weighted sum, a spatial composite of multiple motion vector fields could be constructed, so that spatial portions of multiple of the initial motion vector fields are stitched together.

Once the final motion vector field has been derived, the motion compensation can be applied in the manner already discussed earlier in this disclosure. As noted previously, in cases where one motion vector field is derived for each frame, then the process for deriving the final motion vector field may be applied multiple times to arrive at multiple final motion vector fields, for example one for each frame.

Embodiments of the method described in this disclosure can be advantageously applied for imaging any anatomical region of the body, and for motion-compensating any structural feature of interest.

One particular application area of interest is for cardiac imaging, and for compensating the motion of blood vessels or heart valves.

In some embodiments, the motion-compensation method could be performed a plurality of times (i.e. a plurality of executions), for each of a plurality of different structural features, for example per vessel or per valve. Alternatively, multiple structural features could be tracked and motion-compensated in a single iteration of the method by using an object detection method which detects multiple features, and which generates a motion vector field which covers multiple different features at once.

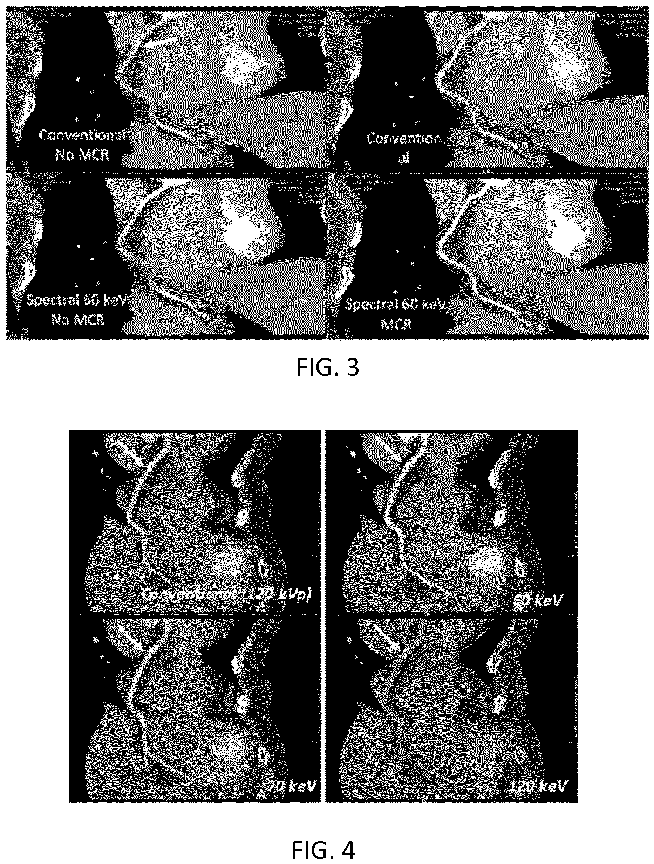

Fig. 3 shows examples of standard and motion compensated reconstructions of a conventional CT image series and a spectral CT image series using the same motion vector field estimated based on conventional images. Fig. 3 (top left) shows a frame from a conventional CT image series which has no motion compensation applied. Fig. 3 (top right) shows a frame from the same conventional CT image series which had motion compensation applied. Fig. 3 (bottom left) shows a frame corresponding to one spectral component of a spectral CT image series (corresponding to a 60 keV energy channel), without motion compensation. Fig. 4 (bottom right) shows a frame corresponding to the same spectral component of a CT image series (corresponding to a 60 keV energy channel), with motion compensation applied, but using the same motion vector field derived from the conventional image. This demonstrates the principle that using image data from a selected spectral or material component of a spectral CT imaging data set, even without altering the motion compensation algorithm, can yield superior results, if the spectral or material basis component is chosen which represents the feature of interest with greatest contrast. The feature of interest in this case is the coronary artery, extending from the top of the frame toward the bottom of the frame, as indicated generally by the white arrow in the top-left image.

Fig. 4 shows different a set of images of a same anatomical region, reconstructed to represent different spectral or material components of a spectral CT image data set. Fig. 4 (top left) shows a conventional (non-spectral) image, meaning it was reconstructed from conventional CT projection data, corresponding to a single x-ray energy band. The remainder of the images in Fig. 4 are spectral CT images. Fig. 4 (top right) shows a spectral CT image corresponding to a 60 keV spectral component, Fig. 4 (bottom left) corresponds to a spectral CT image for a 70 keV spectral component, and Fig. 4 (bottom right) shows a spectral CT image for a 120 keV spectral component.

What is demonstrated by the images in Fig. 4 is the underlying premise discussed earlier in this disclosure, that for a given feature of interest, the feature can be expected to be depicted with greater or lesser contrast in images corresponding to different spectral or material components derived from of a spectral CT image data set. This can be seen clearly in Fig. 4 with regards to the vessel identified by the white arrow. The vessel can be seen to have higher contrast at lower energies, with the highest contrast being in the 60 keV image (Fig. 4 (top right), and with worse contrast in the 120 keV image (Fig. 4 (bottom right)).

From this, it can be recognized that the motion vector fields derived for the depicted vessel, from the image data of the different spectral channels, could be expected to have a fidelity or reliability which similarly varies according to the relative contrast of the feature depicted in those image data. Thus, the method of the invention advantageously provides a means of arriving at a best motion vector field, by analyzing the motion vector fields from images corresponding to multiple different of the spectral or material basis components of the imaging data.

Although an example is presented above related to imaging of a heart, or sections thereof, the methods described in this disclosure can be applied with advantageous effect in the imaging of a wide range of different anatomical bodies or regions. By way of non-exhaustive example, the methods can be applied to motion compensation of spectral images depicting lung motion (breathing), head motion, bowel motion or involuntary patient motion.

Furthermore, it is noted that the above methods are applicable to any variety of spectral tomographic imaging, and not only spectral CT imaging. Furthermore, the methods can be applied even more broadly to any variety of spectral medical imaging, for example to x-ray imaging, for example to spectral C-arm imaging, or On Board Imaging. Within the domain of CT imaging, it may be applied to any variety of CT imaging, including Cone Beam CT.

A further aspect of the invention provides a computer program product comprising computer program code which is configured, when executed by a processor, to cause the processor to perform a method in accordance with any embodiment or example described in this disclosure, or in accordance with any claim of the application.

A further aspect of the invention provides a processing arrangement comprising one or more processors adapted to carry out the method in accordance with any of the embodiments described in this disclosure, or in accordance with any claim of the application.

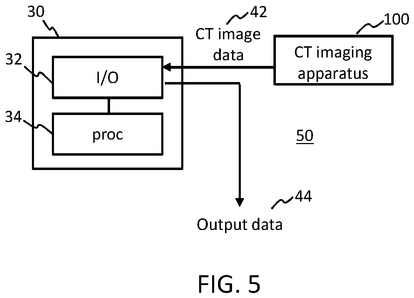

Fig. 5 depicts an example processing arrangement 30, comprising: an input/output (I/O) 32; and one or more processors 34. The input/output 32 is operatively coupled to a CT imaging apparatus 100 to receive, at the input/output, spectral CT imaging data 42 spanning an imaging time period, the spectral CT imaging data comprising a plurality of imaging data subsets, each corresponding to a different spectral or material component of the spectral CT imaging data, and each imaging data subset comprising a series of image frames spanning the imaging time period. However, the image data 42 could be received from a different source, such as from a data-store.

The one or more processors are programmed to perform a method in accordance with any of the embodiments described in this disclosure, or in accordance with any claim of this application, for achieving motion compensation of the image data. At the end of the procedure, a data output 44 representative of the motion-compensated data is provided at the input/output 32.

Another aspect of the invention may provide a system 50 comprising: a CT imaging apparatus 100 for acquiring spectral CT imaging data; and a processing arrangement 30 in accordance with any embodiment or any claim of the application, wherein the input/output 32 is communicatively coupled with the CT imaging apparatus and arranged to receive the spectral CT imaging data 42 acquired thereby.

Embodiments of the invention described above employ a processing arrangement. The processing arrangement may in general comprise a single processor or a plurality of processors. It may be located in a single containing device, structure or unit, or it may be distributed between a plurality of different devices, structures or units. Reference therefore to the processing arrangement being adapted or configured to perform a particular step or task may correspond to that step or task being performed by any one or more of a plurality of processing components, either alone or in combination. The skilled person will understand how such a distributed processing arrangement can be implemented. The processing arrangement includes a communication module or input/output for receiving data and outputting data to further components.

The one or more processors of the processing arrangement can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A computer-implemented method for motion compensation in computed tomography (CT) imaging, comprising:

    receiving (10) spectral CT imaging data spanning an imaging time period, the spectral CT imaging data comprising a plurality of imaging data subsets, each corresponding to a different spectral or material component of the spectral CT imaging, and each imaging data subset comprising data for a series of image frames spanning the imaging time period;
    for each imaging data subset:

        processing (12) the imaging data to identify at least one structural feature of interest, and
        determining (14) at least one motion vector field for the at least one structural feature of interest, representative of motion of the at least one feature over at least a portion of the imaging time period;

    determining (16) at least one final motion vector field based on the motion vector fields for the plurality of imaging data subsets;
    applying (18) motion compensation to at least one of the spectral CT imaging data subsets based on the final motion vector field, to generate at least one motion-compensated imaging data subset; and
    generating (20) a data output representative of the at least one motion-compensated imaging data subset.

2. The method of claim 1, wherein determining the final motion vector field comprises applying a quality assessment to each of the motion vector fields derived from the imaging data subsets.

3. The method of claim 2, wherein
    the quality assessment for a given motion vector field comprises comparing the motion vector field with a reference motion vector field, wherein the reference motion vector field is another one of the motion vector fields derived from a different imaging data subset, an average motion vector field computed from the plurality of derived motion vector fields, or a further pre-determined reference motion vector field.

4. The method of claim 3, wherein the reference motion vector field is a further pre-determined motion vector field, and wherein the quality of a given motion vector field as determined by the quality assessment is dependent upon a degree of consistency with the reference motion vector field.

5. The method of any of claims 2-4, wherein the quality assessment applied to the motion vector fields comprises computing one or more quality factors using one or more pre-determined quality analysis algorithms, for example local noise, spatial or temporal smoothness, or outlier detection.

6. The method of claim 5, wherein the quality assessment for a given motion vector field is performed by applying to the motion vector field a pre-trained artificial neural network, the artificial neural network trained to receive as input a motion vector field, and to generate as output one or more quality factors.

7. The method of any of claims 2-6, wherein determining the final motion vector field comprises selecting one of the plurality of motion vector fields determined from the imaging data subsets based on the quality assessment applied to the plurality of motion vector fields.

8. The method of any of claims 1-6, wherein the final motion vector field is a constructed motion vector field, which is generated based on a combination of the plurality of motion vector fields derived from the plurality of imaging data subsets.

9. The method of claim 8, wherein the final motion vector field is generated as a weighted sum of the motion vector fields for the plurality of CT imaging data subsets.

10. The method of claim 9 in combination with claim 2, wherein the weighting for each respective motion vector field in the weighted sum is determined in dependence upon the result of the quality assessment for the respective motion vector field.

11. The method of any of claims 1-10, wherein the received CT imaging data is imaging data of at least a portion of a heart of a subject, and wherein the structural feature of interest is a blood vessel comprised by the heart.

12. The method of any of claims 1-11, wherein the received spectral CT imaging data includes, for each of the image frames of each of the imaging data subsets, CT projection data associated with the image frame, and a reconstructed image associated with the image frame, and wherein the steps of identifying the at least one structural feature of interest and determining the at least one motion vector field are applied to the reconstructed image data for at least one image frame, and the step of performing the motion compensation comprises applying a reconstruction algorithm to the projection data of the at least one image frame, wherein one or more parameters of the reconstruction algorithm are configured in dependence upon the derived motion vector field.

13. A computer program product comprising computer program code which is configured, when executed by a processor, to cause the processor to perform a method in accordance with any of claims 1-12.

14. A processing arrangement (30), comprising:

an input/output (32); and
one or more processors (34), adapted to:

receive, at the input/output, spectral CT imaging data (42) spanning an imaging time period, the spectral CT imaging data comprising a plurality of imaging data subsets, each corresponding to a different spectral or material component of the spectral CT imaging, and each imaging data subset comprising a series of image frames spanning the imaging time period;
for each imaging data subset:

process the imaging data to identify at least one structural feature of interest, and
determine at least one motion vector field for the at least one structural feature of interest, representative of motion of the at least one feature over the time period;

determine at least one final motion vector field based on the motion vector fields for the plurality of imaging data subsets;
apply motion compensation to at least one of the spectral CT imaging data subsets based on the final motion vector field, to generate at least one motion-compensated imaging data subset; and
generate, at the input/output (32), a data output (44) representative of the at least one motion-compensated imaging data subset.

15. A system (50) comprising:

a CT imaging apparatus (100) for acquiring spectral CT imaging data; and
a processing arrangement (30) in accordance with claim 14, wherein the input/output is communicatively coupled with the CT imaging apparatus and arranged to receive the spectral CT imaging data acquired thereby.

10

Each image data subset

12

14

16

18

20

FIG. 1

FIG. 2

EP 4 250 230 A1

FIG. 3

FIG. 4

FIG. 5

**EP 4 250 230 A1**

Europäisches
Patentamt

European
Patent Office

Office européen
des brevets

# EUROPEAN SEARCH REPORT

Application Number

EP 22 17 5493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2019/282184 A1 (FOURNIE ERIC [DE] ET AL) 19 September 2019 (2019-09-19) | 1,13-15 | INV. G06T7/246 G06T11/00 |
| A | * paragraph [0026] * <br> * paragraph [0082] – paragraph [0109] * <br> * figures 3-7 * | 2-12 | |
| A,D | VAN STEVENDAAL U ET AL: "A motion-compensated scheme for helical cone-beam reconstruction in cardiac CT angiography", MEDICAL PHYSICS, AIP, MELVILLE, NY, US, vol. 35, no. 7, 23 June 2008 (2008-06-23), pages 3239-3251, XP012116151, ISSN: 0094-2405, DOI: 10.1118/1.2938733 * the whole document * | 1-15 | |
| A | Vlassenbroek Alain ET AL: "Innovations in Cardiac CTA" In: "Coronary Artery CTA", 27 September 2017 (2017-09-27), Springer International Publishing, Cham, XP055980253, ISBN: 978-3-319-66988-5 pages 5-30, DOI: 10.1007/978-3-319-66988-5_2, Retrieved from the Internet: URL:http://link.springer.com/content/pdf/10.1007/978-3-319-66988-5_2> * sec. 2.7.3, "Motion Analysis and Compensation in Cardiac CT" sec. 2.7.4, "Cardiac Spectral MSCT"; page 21 – page 26 * | 1-15 | TECHNICAL FIELDS SEARCHED (IPC) <br><br> G06T |

The present search report has been drawn up for all claims

| Place of search | Date of completion of the search | Examiner |
|---|---|---|
| Munich | 14 November 2022 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

## ANNEX TO THE EUROPEAN SEARCH REPORT
## ON EUROPEAN PATENT APPLICATION NO.

EP 22 17 5493

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2022

| Patent document cited in search report | | Publication date | Patent family member(s) | Publication date |
|---|---|---|---|---|
| US 2019282184 | A1 | 19-09-2019 | DE 102018204093 A1 | 19-09-2019 |
| | | | EP 3539475 A1 | 18-09-2019 |
| | | | US 2019282184 A1 | 19-09-2019 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019282184 A1

**Non-patent literature cited in the description**

- **VAN STEVENDAAL, U. ; VON BERG, J. ; LORENZ, C. ; GRASS, M.** A motion-compensated scheme for helical cone-beam reconstruction in cardiac CT angiography. *Med. Phys.,* 2008, vol. 35, 3239-3251